# EUROPÄISCHE PATENTSCHRIFT

(11) **EP 2 789 555 B1**
(45) Veröffentlichungstag und Bekanntmachung des Hinweises auf die Patenterteilung: **08.06.2016**
(21) Anmeldenummer: 14160225.0
(22) Anmeldetag: 17.03.2014
(51) Int. Cl.: B65G 1/04, B65G 1/137

(54) **Verfahren zum auftragsorientierten Bereitstellen von Einzelwaren für mehrere Aufträge aus einem Warenlager**
Method for the order-based provision of individual goods for a plurality of orders from a warehouse
Procédé de préparation de marchandises individuelles pour plusieurs commandes à partir d'un entrepôt de marchandises

(30) Priorität: 09.04.2013 DE 102013206240
(43) Veröffentlichungstag der Anmeldung: 15.10.2014
(73) Patentinhaber: Dürkopp Fördertechnik GmbH, 33703 Bielefeld (DE)
(72) Erfinder: Wend, Michael, 33619 Bielefeld (DE); Zajonc, Dirk, 33334 Gütersloh (DE); Völker, Sigurd, 32602 Vlotho (DE); Sieksmeier, Dirk, 32139 Spenge (DE)
(74) Vertreter: Rau, Schneck & Hübner Patentanwälte Rechtsanwälte PartGmbB

(56) Entgegenhaltungen:
- EP-A2- 0 336 714
- WO-A2-01/47792
- DE-U1- 20 103 664

## Beschreibung

Die Erfindung betrifft ein Verfahren zum auftragsorientierten Bereitstellen von Einzelwaren für mehrere Aufträge aus einem Warenlager.

Die DE 10 2011 103 194 A1 offenbart eine Verteileinrichtung zum artikelorientierten Bereitstellen von Einzelwaren. Dazu werden Speicherkreisel artikelorientiert befüllt, indem auftragsübergreifend gleiche Artikel in verschiedene Speicherkreisel zugeführt werden. Um einen Auftrag, der insbesondere aus verschiedenen Einzelwaren besteht, abzuschließen, werden die artikelrein in den Speicherkreiseln zwischengelagerten Artikel zu einem Warenausgang transportiert. Eine derartige Vorrichtung ist nachteilig, da insbesondere dann, wenn große Aufträge, die viele verschiedene Artikel umfassen, bearbeitet werden, eine große Anzahl von Speicherkreiseln erforderlich ist, um die artikelrein zwischengespeicherten Artikel bereitstellen zu können.

Aus der DE 43 35 637 C1 sind eine Vorrichtung und ein Verfahren zum Sortieren von Einzelstücken bekannt. Um eine Vielzahl von Einzelwaren, die unsortiert in einem Warenlager gelagert sind, auftragsorientiert an einem Warenausgang bereitzustellen, ist ein dreistufiges Sortierverfahren vorgesehen. Das Verfahren zur Auslieferung ist kompliziert und erfordert insbesondere für die Vorbereitung der Sortierung einen hohen Aufwand. Ein derartiges Verfahren ist unwirtschaftlich.

Weitere Systeme zur Förderung von Artikeln sind aus der WO 01/47792 A2 , der DE 201 03 664 U1 und der EP 0 336 714 A2 bekannt.

Es ist eine Aufgabe der vorliegenden Erfindung, ein Verfahren zum auftragsorientierten Bereitstellen von Einzelwaren für mehrere Aufträge aus einem Warenlager zu vereinfachen.

Diese Aufgabe ist durch ein Verfahren mit den Merkmalen gemäß Anspruch 1 gelöst. Erfindungsgemäß wurde erkannt, dass Einzelwaren, die in einem Warenlager insbesondere unsortiert vorliegen, bei einer Auslagerung aus dem Warenlager zunächst in mindestens einem Zwischenspeicher zwischengespeichert werden können. Die Zwischenspeicherung dient als Puffer im Warenstrom. Die Einzelwaren eines Auftrags werden aus dem Zwischenspeicher in einem damit verbundenen Sammelbereich erst dann ausgeschleust, wenn der Auftrag, also sämtliche Einzelwaren des Auftrags, in dem Zwischenspeicher verfügbar sind. Es ist also möglich, einen Auftrag bereits in dem Zwischenspeicher vollständig abzuarbeiten, indem ein Zwischenspeichern solange erfolgt, bis alle Einzelwaren des Auftrags in dem Zwischenspeichere verfügbar sind. Es ist insbesondere nicht erforderlich, für verschiedenartige Einzelwaren jeweils einen Zwischenspeicher zur Verfügung zu stellen. Anschließend werden die in dem Sammelbereich verfügbaren Einzelwaren auftragsrein an eine dafür vorgesehene Abgabelinie des Trennbereichs gefördert. Es ist denkbar, dass in dem Sammelbereich Einzelwaren verschiedener Aufträge vorgesehen sind. Das erfindungsgemäße Verfahren ist flexibel einsetzbar. Der Zeit- und Kostenaufwand für die Durchführung des Verfahrens ist reduziert. Insbesondere wurde erkannt, dass es nicht erforderlich ist, die Einzelwaren für die Bereitstellung am Warenausgang in einer eindeutigen Reihenfolge bereitzustellen. Eine derartige Reihenfolge ist insbesondere für den Versandhandel nicht erforderlich.

Eine Vorrichtung zum auftragsorientierten Bereitstellen von Einzelwaren für mehrere Aufträge aus einem Warenlager umfasst mindestens einen mit einem Warenlager verbundenen Zwischenspeicher zum Zwischenspeichern von Einzelwaren mindestens eines Auftrags, jeweils einen mit dem mindestens einen Zwischenspeicher verbundenen Sammelbereich zum Sammeln der Einzelwaren des mindestens einen komplettierten Auftrags, einen mehrere Abgabelinien aufweisenden Trennbereich zum auftragsorientierten Bereitstellen der Einzelwaren des mindestens einen komplettierten Auftrags. Es wurde erkannt, dass ein Zwischenspeicher zum Zwischenspeichern von Einzelwaren mindestens eines Auftrags genutzt werden kann, um die aus einem Warenlager ausgelagerten Einzelwaren in einem Warenstrom zu puffern. Insbesondere ist es möglich, die Einzelwaren in dem Zwischenspeicher so lange zwischenzupuffern, dass keine zu langen zeitlichen Zwischenräume zwischen den Einzelwaren eines gemeinsamen Auftrags, zwischen dem Zwischenspeicher und dem Warenausgang auftreten. Der Zwischenspeicher ist insbesondere als Warteschleife ausgeführt. Es wurde zudem erkannt, dass eine eindeutige Sortierreihenfolge der Einzelwaren, insbesondere für den Versandhandel, nicht erforderlich ist. Dadurch kann auf eine zusätzliche Sortierstufe bei der Vorrichtung verzichtet werden. Die Vorrichtung weist einen mit dem mindestens einen Zwischenspeicher verbundenen Sammelbereich auf. Die Einzelwaren werden in dem mindestens einen Zwischenspeicher solange zwischengespeichert, bis alle Einzelwaren für einen bestimmten Auftrag in dem Zwischenspeicher verfügbar sind. Das bedeutet, dass insbesondere verschiedenartige Einzelwaren in ein und demselben Zwischenspeicher zwischengespeichert sind. Es wurde erkannt, dass es insbesondere nicht erforderlich, die Artikel artikelrein in den Zwischenspeichern zwischenzuspeichern. Dadurch kann die Auslastung und Ausnutzung der Zwischenspeicher erhöht werden. Ein artikelreines Zwischenspeichern ist nicht erforderlich. Der Durchsatz, das heißt die Abarbeitungsdauer von Aufträgen, ist verkürzt. Anschließend beginnt ein Ausschleusen der Einzelwaren des komplettierten Auftrags in den Sammelbereich. Insbesondere sind mehrere Zwischenspeicher vorgesehen. Der Sammelbereich dient zum Sammeln der Einzelwaren eines Auftrags, der in dem Zwischenbereich komplett vorliegt. Es ist insbesondere möglich, dass in einem Sammelbereich Einzelwaren verschiedener Aufträge gesammelt werden. Ein auftragsorientiertes Bereitstellen der Einzelwaren des komplettierten Auftrags ist durch einen Trennbereich ermöglicht. Der Trennbereich weist mehrere Abgabelinien auf. An einer Abgabelinie werden sämtliche Einzelwaren des komplettierten Auftrags bereitgestellt. Von einer Abgabelinie wird ein komplettierter Auftrag an einen Warenausgang gefördert. Insbesondere werden also alle Einzelwaren des Auftrags an genau einer, insbesondere vorbestimmten, Abgabelinie bereitgestellt. Die erfindungsgemäße Vorrichtung erfordert einen reduzierten Platzaufwand. Die Vorrichtung ermöglicht insbesondere ein vollautomatisiertes Bereitstellen der Einzelwaren.

Gemäß einer vorteilhaften Ausgestaltung weist der mindestens eine Zwischenspeicher einen Speichereingang und einen Speicherausgang auf, wobei eine Identifikationseinheit am Speichereingang und/oder am Speicherausgang zum Identifizieren der Einzelwaren vorgesehen ist. Dadurch ist es möglich, den aktuellen Warenstrom und insbesondere eine aktuelle Position einer Einzelware in dem Warenstrom und insbesondere innerhalb der Vorrichtung zu erfassen. Insbesondere ist es möglich festzustellen, ob alle Einzelwaren eines Auftrags in dem Zwischenspeicher komplettiert sind, indem die Identifikationseinheit am Speichereingang die in den Zwischenspeicher eingelagerten Einzelwaren erfasst. Eine Identifikationseinheit am Speicherausgang ermöglicht das gezielte Ausschleusen der Einzelwaren von dem mindestens einen Zwischenspeicher in den Sammelbereich.

Gemäß einer besonders vorteilhaften Ausgestaltung ist am Speicherausgang eine Weicheneinheit vorgesehen, die ermöglicht, dass eine Einzelware entweder in dem Zwischenspeicher verbleibt oder in den Sammelbereich ausgeschleust wird. Insbesondere ist die Weicheneinheit mit der Identifikationseinheit, die insbesondere am Speicherausgang angeordnet ist, in Signalverbindung. Es ist auch denkbar, dass die Weicheneinheit mit einer Identifikationseinheit am Speichereingang in Signalverbindung steht.

Gemäß einer weiteren vorteilhaften Ausgestaltung ist der Zwischenspeicher als Umlaufspeicher ausgeführt. Die in dem Zwischenspeicher zwischengespeicherten Einzelwaren werden kontinuierlich umlaufend gespeichert. Dadurch ist insbesondere der Platzbedarf für die erfindungsgemäße Vorrichtung reduziert. In dem Zwischenspeicher stehen die zwischengespeicherten Einzelwaren kontinuierlich für eine nachfolgende Auslagerung zur Verfügung. Gemäß einer besonders vorteilhaften Ausgestaltung weist der Umlaufspeicher eine mittels eines Antriebs angetriebene Fördereinheit auf. Die Fördereinheit ermöglicht insbesondere eine veränderlich einstellbare Umlauffördergeschwindigkeit. Dadurch ist es möglich, eine Umlaufdauer der Einzelwaren in dem Umlaufspeicher gezielt einzustellen. Die Umlaufdauer kann auch durch die Kapazität einer Fördereinheit, mit der die Einzelwaren in den Umlaufspeicher gefördert werden, eingestellt werden.

Gemäß einer weiteren vorteilhaften Ausgestaltung ist eine Sortiereinheit zum sortierten Zuführen der Einzelwaren in den mindestens einen Zwischenspeicher vorgesehen. Insbesondere ist die Sortiereinheit entlang des Warenstroms vor dem Speichereingang des Zwischenspeichers angeordnet. Die Sortiereinheit, die insbesondere ein Identifikationsmodul zum Identifizieren der Einzelwaren in dem Warenstrom aufweist, ermöglicht einen ersten Sortierschritt, indem Einzelwaren verschiedener Aufträge auf verschiedene Zwischenspeicher aufgeteilt werden können.

Gemäß einer vorteilhaften Ausgestaltung ist eine Steuereinheit zum Steuern des Warenstroms vorgesehen. Insbesondere ist die Steuereinheit als ein sogenanntes Warehouse Management System (WMS) ausgeführt. Die Steuereinheit ist insbesondere mit Identifikationseinheiten zum Identifizieren der Einzelwaren, mit einer Weicheneinheit an einem Speicherausgang des mindestens einen Zwischenspeichers, mit einer Fördereinheit eines Umlaufspeichers und mit einer Sortiereinheit in Signalverbindung. Es ist auch denkbar, dass die Steuereinheit mit weiteren Komponenten der Vorrichtung in Signalverbindung steht, um ein Steuern des Warenstroms und insbesondere das vollautomatisierte Bereitstellen der Einzelwaren zu vereinfachen.

Gemäß einer weiteren vorteilhaften Ausgestaltung ist ein Identifikationsschlüssel vorgesehen, der einer Einzelware zuordenbar ist. Mittels des Identifikationsschlüssels ist eine automatische, insbesondere eindeutige, Identifikation der Einzelware möglich. Dadurch kann die Einzelware entlang des Warenstroms eindeutig verfolgt werden. Ein sogenanntes Tracking ist ermöglicht. Darüber hinaus ist die vollautomatisierte Zusammenstellung eines Auftrags von Einzelwaren vereinfacht. Insbesondere ist der Identifikationsschlüssel ein Transponder, der insbesondere an der Einzelware angebracht ist. Es sind auch andere Schlüssel oder Codierungen denkbar. Insbesondere ist ein Barcode wie beispielsweise ein Streifencode oder ein zweidimensionaler QR-Code denkbar.

Gemäß einer weiteren vorteilhaften Ausgestaltung ist jeder Abgabelinie eine Separiereinheit zugeordnet, wobei die Separiereinheit mit einer Identifikationseinheit zusammenwirkt. Vorteilhafterweise ist die Identifikationseinheit benachbart zu der Separiereinheit vorgesehen. Es ist auch denkbar, dass die Identifikationseinheit in die Separiereinheit integriert ist. Es ist auch denkbar, dass die Separiereinheit an der Abgabelinie mit einer Identifikationseinheit am Speicherausgang des Zwischenspeichers zusammenwirkt. In diesem Fall kann die Anzahl der erforderlichen Komponenten zur Verwirklichung der erfindungsgemäßen Vorrichtung reduziert werden. Die Separiereinheit ermöglicht ein Separieren der vom Sammelbereich zu dem Trennbereich geförderten Einzelwaren, so dass je Abgabelinie die Einzelwaren auftragsrein bereitgestellt werden.

Gemäß einer weiteren vorteilhaften Ausgestaltung weist der mindestens eine Zwischenspeicher eine Speicherkapazität derart auf, dass Einzelwaren mehrerer Aufträge in dem mindestens einen Zwischenspeicher zwischengespeichert werden können. Die Speicherkapazität des mindestens einen Zwischenspeichers ist also mindestens so groß wie die Summe aus zwei Auftragskapazitäten. Als Auftragskapazität wird die Anzahl der Einzelwaren eines Auftrags verstanden.

Gemäß einer vorteilhaften Ausgestaltung erfolgt ein Abgeben der Einzelwaren des komplettierten Auftrags von der Abgabelinie an den Warenausgang. Damit ist ein durchgängiger, insbesondere vollautomatisierter, Warenstrom von dem Warenlager bis zum Warenausgang gewährleistet.

Gemäß einer weiteren vorteilhaften Ausgestaltung erfolgt das Zwischenspeichern der Einzelwaren durch ein Umlaufen derselben in einem als Umlaufspeicher ausgeführten Zwischenspeicher. Diese Form der Zwischenspeicherung hat sich als besonders vorteilhaft erwiesen, um einerseits ausreichend Zwischenspeicherkapazität bereitzustellen und gleichzeitig eine kontinuierliche Aufnahme und Abgabe der Einzelwaren in dem Warenstrom zu ermöglichen.

Gemäß einer weiteren vorteilhaften Ausgestaltung erfolgt ein Prüfen, ob die an einem Speicherausgang des Zwischenspeichers befindliche, insbesondere kontinuierlich umlaufende, Einzelware einem komplettierten Auftrag zugeordnet ist. Nur für den Fall, dass diese Prüfung positiv ist, erfolgt eine Auslagerung der Einzelware von dem Zwischenspeicher in den Sammelbereich. Andernfalls verbleibt die Einzelware in dem Zwischenspeicher, solange bis der Auftrag komplettiert ist.

Gemäß einer weiteren vorteilhaften Ausgestaltung erfolgt das Zuführen der Einzelwaren in dem mindestens einen Zwischenspeicher unabhängig von einer aktuellen Anordnung der bereits zwischengespeicherten Einzelwaren in dem Zwischenspeicher. Das Verfahren nutzt also gerade aus, dass eine sortierte Reihenfolge der Einzelwaren in dem Warenstrom und insbesondere in dem mindestens einen Zwischenspeicher nicht erforderlich ist. Dadurch ist das Verfahren in der Durchführung unaufwändig und kostengünstig.

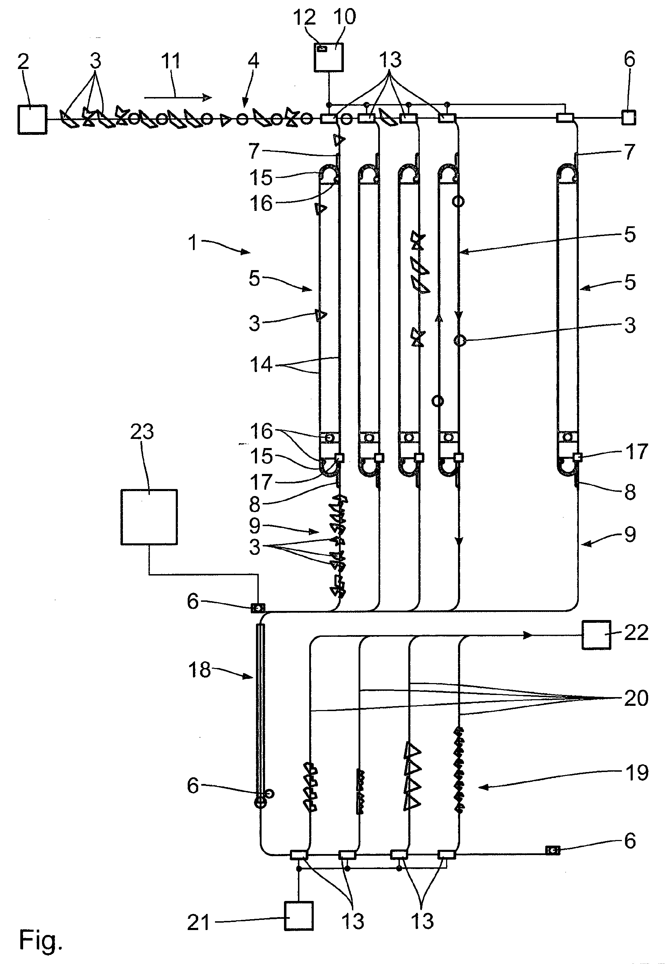

Ein Ausführungsbeispiel der Erfindung wird nachfolgend anhand der einzigen Fig. näher erläutert. Die Fig. zeigt eine schematische Draufsicht auf eine erfindungsgemäße Vorrichtung, die als Ganzes mit 1 bezeichnet ist. Ein schematisch dargestelltes Warenlager 2 dient zum Lagern von Einzelwaren 3. Insbesondere sind die Einzelwaren 3 in dem Warenlager 2 unsortiert eingelagert. Insbesondere erfolgt die Auslagerung aus dem Warenlager über eine erste Fördereinrichtung 4 unsortiert. Die Einzelwaren 3 bilden einen Warenstrom. Die Einzelwaren 3 sind in der Fig. mit Symbolen unterschiedlicher Kontur gekennzeichnet. Unterschiedliche Symbole stehen dabei für unterschiedliche Aufträge. Das bedeutet also, dass Einzelwaren 3, die durch ein identisches Symbol dargestellt sind, einem gemeinsamen Auftrag zugeordnet sind. Identische Symbole können aber trotzdem verschiedene Einzelwaren symbolisieren, beispielsweise wenn ein Auftrag verschiedene Einzelwaren 3 umfasst wie beispielsweise Zahnpasta und Haargel. Entsprechend ist es auch denkbar, dass in der Fig. Einzelwaren 3 mit verschiedenen Symbolen gekennzeichnet sind, da diese verschiedenen Aufträgen zugeordnet sind, wobei die verschieden gekennzeichneten Einzelwaren 3 identische Einzelwaren sein können. Dies ist dann der Fall, wenn beispielsweise Zahnpasta sowohl von einem ersten Auftrag als auch von einem zweiten Auftrag umfasst ist.

Ein Auftrag umfasst typischerweise durchschnittlich etwa zwanzig Einzelwaren 3. Das Auftragsvolumen, also die Anzahl der Einzelwaren 3 pro Auftrag kann in einem großen Bereich variieren. Insbesondere ist ein Auftrag denkbar, der lediglich aus einer einzigen Einzelware 3 besteht. Es sind auch Aufträge denkbar, die bis zu 100 oder mehr Einzelwaren 3 umfassen.

Die Einzelwaren werden insbesondere in einer Einzelverpackung wie beispielsweise in einem Einzelkarton oder einem geschlossenen Einzelbeutel innerhalb der Vorrichtung 1 gehandhabt, insbesondere gefördert. Es ist auch denkbar, dass die Einzelwaren 3 Kleidungsstücke sind, insbesondere Anzüge, Jacken, Hosen, Hemden, Blusen. Die Kleidungsstücke können an jeweils einem Bügel hängend mittels einer entsprechenden Adaptervorrichtung mittels eines dafür vorgesehenen, aus dem Stand der Technik bekannten Transport- und Handhabungssystems in der Vorrichtung 1 gefördert und gehandhabt werden.

Das Warenlager 2 ist über die erste Fördereinrichtung 4 mit einer Vielzahl von Zwischenspeichern 5 verbunden. Die erste Fördereinrichtung 4 weist einen Antrieb, insbesondere einen Elektromotor 6 auf, der eine selbsttätige, automatische Förderung der Einzelwaren 3 von dem Warenlager 2 zu den Zwischenspeichern 5 ermöglicht.

Gemäß dem gezeigten Ausführungsbeispiel weist die Vorrichtung 1 fünf Zwischenspeicher 5 auf. Es können auch mehr, insbesondere bis zu zwanzig, oder weniger als fünf Zwischenspeicher 5 vorgesehen sein. Jeder Zwischenspeicher 5 weist einen der ersten Fördereinrichtung 4 zugewandten Speichereingang 7 auf. Weiterhin weist jeder Zwischenspeicher 5 einen Speicherausgang 8 auf, über den jeder Zwischenspeicher 5 mit einem damit verbundenen Sammelbereich 9 verbunden ist.

Den Einzelwaren 3 ist jeweils ein Identifikationsschlüssel, der nicht im Einzelnen dargestellt ist, zugeordnet. Der Identifikationsschlüssel ist insbesondere als Transponder ausgeführt, der an der Einzelware 3 befestigt ist. Der Transponder dient zur automatischen Identifikation der Einzelwaren 3. Dazu ist eine Sortiereinheit 10 vorgesehen, die entlang der Förderrichtung 11 der ersten Fördereinrichtung 4 dem ersten, in der Fig. links dargestellten Zwischenspeichers 5 angeordnet ist. Die Sortiereinheit 10 weist insbesondere eine Identifikationseinheit 12 auf. Die Sortiereinheit 10 steht zudem mit mehreren Weichen 13 in Signalverbindung. Jede Weiche 13 ist einem Speichereingang 7 eines Zwischenspeichers 5 zugeordnet. In Abhängigkeit der Identifikation einer Einzelware 3 mittels der Identifikationseinheit 12 ennöglicht die Weiche 13 entweder ein Passieren entlang der Förderrichtung 11 oder ein sortiertes Zuführen der Einzelware 3 zu einem dafür vorgesehenen Zwischenspeicher 5. Die Sortiereinheit 12 ist derart ausgeführt, dass ein auftragsorientiertes Zuführen der Einzelwaren 3 zu den jeweiligen Zwischenspeichern 5 erfolgt. Das bedeutet, dass die Einzelwaren 3 eines Auftrags in ein und demselben Zwischenspeicher 5 zwischengespeichert werden. Es ist möglich, dass Einzelwaren 3 mehrerer Aufträge einem Zwischenspeicher 5 zugeordnet sind. Das bedeutet, dass die Einzelwaren 3 verschiedener Aufträge in ein und demselben Zwischenspeicher 5 angeordnet sein können.

Die Zwischenspeicher 5 sind jeweils identisch ausgeführt. Die Zwischenspeicher 5 sind jeweils als Umlaufspeicher ausgeführt. Die Umlaufspeicher 5 ermöglichen ein kontinuierliches Umlaufen der Einzelwaren 3. Insbesondere weisen die Umlaufspeicher 5 eine Umlaufbahn auf, die im Wesentlichen einem langgezogenen Rechteck entspricht. Das langgezogene Rechteck weist zwei parallel angeordnete Längsbahnen 14 auf, die an ihren Enden jeweils durch ein im Wesentlichen halbkreisförmiges Verbindungsstück 15 verbunden sind. Es ist denkbar, dass die Umlaufbahn der Zwischenspeicher 5 in einer anderen Weise als in der Fig. dargestellt ausgeführt ist. Beispielsweise könnten die Zwischenspeicher eine kreisförmige Umlaufbahn, eine quadratische oder in anderer Weise geformte Umlaufbahn aufweisen. Sowohl an den Längsbahnen 14 als auch an den Verbindungsstücken 15 sind Antriebe 16 vorgesehen. Die Antriebe 16 sind jeweils Bestandteil einer Fördereinheit, die den kontinuierlichen Umlauf der Einzelwaren 3 verbessert. Die Fördereinheit gewährleistet insbesondere, dass eine Umlauffördergeschwindigkeit in dem Umlaufspeicher 5 veränderlich einstellbar ist. Dies erfolgt insbesondere dadurch, dass die Antriebsgeschwindigkeit zumindest eines Antriebes veränderlich einstellbar ist. Dadurch kann die Umlaufdauer der Einzelwaren 3 in dem Umlaufspeicher 5 gezielt verändert werden.

Die Speicherkapazität der Zwischenspeicher 5 ist jeweils derart gewählt, dass Einzelartikel 3 mehrerer Aufträge in dem Zwischenspeicher 5 zwischengespeichert werden können.

Im Bereich des Speicherausgangs 8 der Zwischenspeicher 5 ist jeweils eine nicht näher dargestellte Weicheneinheit 17 vorgesehen, in die insbesondere eine nicht dargestellte Identifikationseinheit integriert sein kann. Die in die Weicheneinheit 17 integrierte Identifikationseinheit ist identisch zu der in die Sortiereinheit 10 integrierte Identifikationseinheit 12. Die Weicheneinheit 17 ermöglicht ein Ausschleusen von Einzelwaren 3 von dem Zwischenspeicher 5 in den Speicherbereich 9. Sofern in dem Zwischenspeicher 5 sämtliche Einzelwaren 3 eines Auftrags komplett vorliegen, werden die Einzelwaren 3 an der Weicheneinheit 17 in den Sammelbereich 9 ausgeschleust. Sofern ein Auftrag unkomplettiert ist, d. h. sofern nicht sämtliche Einzelwaren 3 des Auftrags in dem Zwischenspeicher 5 verfügbar sind, wird eine Einzelware 3 von der Weicheneinheit 17 entlang des Verbindungsstücks 15 weitergefördert. Die Einzelware 3 bleibt innerhalb des Zwischenspeichers 5.

Wie insbesondere bei dem in der Fig. links dargestellten Speicherbereich 9 können Einzelwaren 3 verschiedener Aufträge in dem Sammelbereich 9 gesammelt sein. Von dem Sammelbereich 9 können Einzelwaren 3 der komplettierten Aufträge mittels einer zweiten Fördereinrichtung 18 zu einem Trennbereich 19 gefördert werden. Der Trennbereich 19 weist mehrere Abgabelinien 20 auf. Gemäß dem gezeigten Ausführungsbeispiel umfasst der Trennbereich 19 vier Abgabelinien 20. Es können auch mehr als vier, insbesondere zwölf oder fünfzehn Abgabelinien 20, oder weniger als vier Abgabelinien 20 vorgesehen sein. Wesentlich ist, dass pro Abgabelinie 20 die Einzelwaren 3 auftragsrein bereitgestellt werden. Die auftragsreine Bereitstellung der Einzelwaren 3 an den Abgabelinien 20 ergibt sich gemäß der Fig. dadurch, dass je Abgabelinie 20 die Einzelwaren 3 identische Symbole haben.

Die zweite Fördereinrichtung 18 weist mehrere Antriebe 6 auf, die insbesondere identisch sind zu dem Antrieb 6 der ersten Fördereinrichtung 4. Gemäß der Darstellung in der Fig. weist die zweite Fördereinrichtung 18 einen horizontal verlaufend dargestellten ersten Antrieb 6 auf, der mit den Sammelbereichen 9 verbunden ist. Dieser erste Antrieb 6 dient zum Abziehen der Einzelwaren 3 der fertigen Aufträge aus den Sammelbereichen 9. Mit diesem ersten Antrieb 6 ist ein zweiter Antrieb 6 verbunden, der in der Fig. vertikal orientiert dargestellt ist. Der zweite Antrieb 6 ist gemäß der Fig. parallel zu den Abgabelinien 20 des Trennbereichs 19 dargestellt. Mit dem zweiten Antrieb 6 ist ein dritter Antrieb 6 verbunden, der ein Einlagern der Einzelwaren 3 in die Abgabelinien 20 des Trennbereichs 19 ermöglicht. Der zweite Antrieb 6 kann auch entfallen.

Die zweite Fördereinrichtung 18 kann auch mehrere, insbesondere hintereinander und/oder parallel geschaltene zweite Antriebe 6 aufweisen. Insbesondere ist jeder der zweiten Antriebe 6 derart ausgebildet, dass er die Kapazität des Trennbereichs 19 abbilden kann. Gemäß dem gezeigten Ausführungsbeispiel in der Fig. kann der zweite Antrieb 6 also die Einzelwaren 3 von vier Aufträgen aufnehmen, da der Trennbereich 19 vier Abgabelinien 20 aufweist. Das bedeutet, dass zwei hintereinander geschaltene zweite Antriebe 6 eine Kapazität von Einzelwaren 3 für acht Aufträge aufweisen. Entsprechend können an jedem Sammelbereich 9 acht komplettierte Aufträge bevorratet sein. Durch das Vorsehen mehrerer zweiter Antriebe 6 kann die jeweilige Kapazität der Sammelbereiche 9 vergrößert werden. Entsprechend können drei hintereinander geschaltene zweite Antriebe 6 die Einzelwaren 3 von zwölf Aufträgen aufnehmen. Die Anzahl der zweiten Antriebe 6 dient als Multiplikator für die Kapazität der Sammelbereiche 9. Dadurch ist es möglich, bereits komplettierte Aufträge, die von einem Sammelbereich 9 zu dem Trennbereich 19 gefördert werden, im Bereich der zweiten Fördereinrichtung 18 an einem der zweiten Antriebe 6 zwischenzuspeichern. Eine derartige Zwischenspeicherung komplettierter Aufträge an einem der zweiten Antriebe 6 kann vorteilhaft sein, um die Kapazität der Abgabelinien 20 des Trennbereichs 19 ergänzend zu erweitern. Komplettierte Aufträge können mit hoher Abzugsrate von den Sammelbereichen 9 abgezogen werden und ermöglichen somit das Auslagern von Einzelwaren 3 komplettierter Aufträge aus den Zwischenspeichern 5. Dadurch wird verhindert, dass die Aufnahme neuer Einzelwaren. 3 in einen Zwischenspeicher 5 aufgrund einer Kapazitätsauslastung in dem Zwischenspeicher 5 blockiert ist. Insbesondere dann, wenn bei einer Vorrichtung lediglich eine reduzierte Anzahl an Abgabelinien 20 vorgesehen ist und, insbesondere zufällig, die in den Abgabelinien bereitgestellten Aufträge jeweils nur geringe Anzahlen an Einzelwaren 3 umfassen, steigt das Risiko einer Kapazitätsauslastung der Zwischenspeicher 5. Eine Blockade der Abgabelinien 20 im Trennbereich 19 ist auch denkbar, indem die Einzelwaren 3 im Bereich der Abgabelinien 20 weiteren, nachfolgenden Arbeitsschritten unterliegen wie beispielsweise einem Verpacken und/oder einem Erfassen der Einzelwaren 3 des Auftrags durch einen Kunden. Neben der Erhöhung der Kapazität der Zwischenspeicher 5 selbst und/oder der Erhöhung der Anzahl der Abgabelinien 20, kann auch ein zusätzliches Zwischenspeichern komplettierter Aufträge mittels zusätzlicher zweiter Antriebe 6 eine Entlastung darstellen.

Den Abgabelinien 20 des Trennbereich 19 ist eine Separiereinheit 21 zugeordnet. Die Separiereinheit 21 ist im Wesentlichen identisch zu der Sortiereinheit 10 an der ersten Fördereinrichtung 4 ausgeführt. Die Separiereinheit 21 wirkt mit einer Identifikationseinheit zusammen. Die Identifikationseinheit kann in der Separiereinheit 21 integriert sein. Es ist auch denkbar, dass die Separiereinheit 21 mit einer beispielsweise im Bereich des Speicherausgangs 8 eines Zwischenspeichers 5 angeordneten Identifikationseinheit zusammenwirkt. Das Zusammenwirken zwischen der Identifikationseinheit und der Separiereinheit 21 gewährleistet, dass die von dem Speicherbereich 9 zu dem Trennbereich 19 geförderten Einzelwaren 3, die in dem Speicherbereich 9 noch unsortiert angeordnet sein können, auftragsrein auf die Abgabelinien 20 aufgeteilt werden. Dazu ist in einem jeweiligen Eingangsbereich der Abgabelinien 20 jeweils eine Weiche 13 vorgesehen. Die Weichen 13 sind insbesondere identisch zu den an der ersten Fördereinrichtung 4 angeordneten Weichen 13 ausgeführt. Die Weichen 13, die jeweils in einem Eingangsbereich der Abgabelinien 20 angeordnet sind, stehen mit der Separiereinheit 21 in Signalverbindung.

Es ist denkbar, dass die Vorrichtung 1 eine nicht dargestellte Direkt-Förderleitung aufweist. Die Direkt-Förderleitung ist im Bereich der ersten Fördereinrichtung 4 zwischen dem Warenlager 2 und der Sortiereinheit 10 als Abzweigung vorgesehen. Die Direkt-Förderleitung verbindet die erste Fördereinrichtung 4 direkt mit dem Trennbereich 19. Die Direkt-Förderleitung dient zum direkten Fördern von Einzelwaren 3, wobei eine einzige Einzelware 3 einen Auftrag bildet. Ein derartiger Auftrag, der lediglich aus einer einzigen Einzelware 3 besteht, muss nicht zwischengespeichert werden. Dadurch, dass derartige Einzelwaren 3 direkt von der ersten Fördereinrichtung 4 zu dem Trennbereich 19, also insbesondere ohne Zwischenspeichern und Sortieren, gefördert werden können, wird die Kapazität der Zwischenspeicher 5, der Sammelbereiche 9 und der Fördereinrichtungen nicht unnötig belastet. Derartige Ein-Einzelwaren-Aufträge können schneller abgearbeitet werden.

Da der Trennbereich 19 gemäß dem gezeigten Ausführungsbeispiel vier Abgabelinien 20 aufweist, ist die maximal zulässige Anzahl an Aufträgen, die in einem Zwischenspeicher 5 zwischengespeichert und/oder in einem Sammelbereich 9 gesammelt werden kann, auf vier Aufträge begrenzt. Allgemein gilt also, dass die Anzahl n der Abgabelinien 20 des Trennbereichs 19 die maximal zulässige Anzahl verschiedener Auftragstypen in dem Sammelbereich 9 vorgibt. Die erforderliche Speicherkapazität K des Zwischenspeichers 5 ergibt sich aus dem Produkt der Anzahl p der Einzelwaren 3 je Auftrag und der Anzahl n der Aufträge. Der Speichereingang 7 und der Speicherausgang 8 ermöglichen jeweils beispielsweise ein Ein- bzw. Auslagern mit einer Rate von etwa 5000 Einzelwaren 3 je Stunde. Es ist denkbar, die Rate, mit der die Einzelwaren 3 in den Zwischenspeicher 5 ein- bzw. ausgelagert werden, auf beispielsweise 10000 Einzelwaren 3 je Stunde, insbesondere auf bis zu 15000 Einzelwaren 3 je Stunde oder eine noch größere Rate zu steigern.

Ein Fördern der Einzelwaren 3 von dem Sammelbereich 9 zu den Abgabelinien 20 des Trennbereichs 19 erfolgt mit einer gegenüber der Rate zum Ein- bzw. Auslagern des Zwischenspeichers 5 erhöhten Förderrate. Die Förderrate zum Fördern der Einzelwaren 3 von dem Sammelbereich 9 zu dem Trennbereich 19 beträgt beispielsweise mindestens 10000 Einzelwaren 3 je Stunde, insbesondere mindestens 15000 Einzelwaren 3 je Stunde. Es ist denkbar, die Förderrate auf bis zu 20000 Einzelwaren 3 je Stunde oder mehr zu erhöhen.

Die Abgabelinien 20 sind jeweils mit einem Warenausgang 22 in Förderverbindung.

Im Folgenden wird das erfindungsgemäße Verfahren zum auftragsorientierten Bereitstellen der Einzelwaren 3 für mehrere, insbesondere n, Aufträge aus dem Warenlager 2 zu dem Warenausgang 22 näher erläutert. Eine Vielzahl von Einzelwaren 3 wird als unsortierter Warenstrom aus dem Warenlager 2 ausgelagert und entlang der Förderrichtung 11 der ersten Fördereinrichtung 4 zur Sortiereinheit 10 gefördert. Der Warenstrom enthält Einzelwaren 3 mehrerer Aufträge. Die Einzelwaren 3 werden entsprechend ihrer Zugehörigkeit zu einem Auftrag in verschiedenen Zwischenspeichern 5 eingelagert. Dazu dient die Sortiereinheit 10. Mittels der Identifikationseinheit 12, die mit dem Transponder an den Einzelwaren 3 zusammenwirkt, werden die Einzelwaren 3 erkannt und über die Weichen 13 einem entsprechenden Zwischenspeicher 5 zugeleitet. Über den Speichereingang 7 gelangen die Einzelwaren 3 in den vorbestimmten Zwischenspeicher 5. In dem Zwischenspeicher 5 können die Einzelwaren 3 zwischengespeichert werden. Insbesondere werden in jedem Zwischenspeicher 5 Einzelartikel 3 mehrerer Aufträge zwischengespeichert. Mit dem Speichereingang 7 kann eine Identifikationseinheit zusammenwirken. Es kann sich hierbei um die Identifikationseinheit 12 handeln, die in der Sortiereinheit 10 integriert ist. Es ist auch möglich, dass an jedem Speichereingang 7 eines Zwischenspeichers 5 eine separate Identifikationseinheit 12 vorgesehen ist. Die Identifikationseinheit 12 erfasst die in dem Zwischenspeicher 5 aufgenommenen Einzelwaren 3. Diese Information, also die Anzahl von Einzelwaren 3 eines Auftrags in dem Zwischenspeicher 5, kann an eine zentrale Steuereinheit 23 übertragen werden. In der zentralen Steuereinheit 23 ist insbesondere hinterlegt, welche Einzelwaren 3 der entsprechende Auftrag umfasst. Entsprechend kann über die Steuereinheit 23 ein Abgleich erfolgen, ob die in dem Zwischenspeicher 5 zwischengespeicherten Einzelwaren 3 für einen bestimmten Auftrag bereits komplett vorliegen. Sobald sämtliche für den Auftrag erforderliche Einzelwaren 3 in dem Zwischenspeicher 5 verfügbar sind, wird ein entsprechendes Vollständigkeitssignal beispielsweise von der Identifikationseinheit 12 oder von der zentralen Steuereinheit 23 ausgelöst. Die Steuereinheit 23 ist insbesondere als Warehouse Management System ausgeführt und dient zum Steuern des Warenstroms innerhalb der Vorrichtung 1. Die zentrale Steuereinheit 23 ist insbesondere mit sämtlichen elektrischen Einheiten der Vorrichtung 1 verbunden. Insbesondere ist die Steuereinheit 23 in Signalverbindung mit den Identifikationseinheiten 12, den Weichen 13, der Sortiereinheit 10, der Separiereinheit 21, den Antrieben 6, 16, den Zwischenspeichern 5, insbesondere den Speichereingängen 7 und/oder den Speicherausgängen 8, den Fördereinrichtungen 4, 18, dem Sammelbereich 9 und dem Trennbereich 19. Aus Gründen der Übersichtlichkeit sind diese Signalverbindungsleitungen, die kabelgebunden oder kabellos ausgefülirt sein können, in der Fig. nicht dargestellt. Exemplarisch ist eine Signalverbindung in Form einer Leitung von der zentralen Steuereinheit zu einem Antrieb 6 der zweiten Fördereinrichtung 18 dargestellt. Alle weiteren Signalleitungen können identisch ausgeführt sein und insbesondere einen bi-direktionalen Informationsfluss ermöglichen.

Die Einzelwaren 3 eines Auftrags werden in dem Zwischenspeicher 5 zwischengespeichert, indem die Einzelwaren 3 entlang einer Endlosbahn in einer Warteschleife kontinuierlich umlaufen.

Sobald sämtliche Einzelwaren 3 eines Auftrags in dem Zwischenspeicher 5 komplett verfügbar sind, werden die Einzelwaren 3 dieses Auftrags über die Weicheneinheit 17 am Speicherausgang 8 ausgeschleust und dem Sammelbereich 9 zugeführt. Da die Einzelwaren 3 mehrerer Aufträge in dem Zwischenspeicher 5 unsortiert vorliegen, ist es möglich, dass die Einzelwaren 3 der kompletten Aufträge in dem Sammelbereich ebenfalls unsortiert angeordnet sind. Es handelt sich hierbei jedoch ausschließlich um Einzelwaren 3 komplettierter Aufträge. Beispielsweise dann, wenn der Sammelbereich 9 gefüllt ist, werden die Einzelware 3 von dem Sammelbereich 9 zu dem Trennbereich 19 über die zweite Fördereinrichtung 18 gefördert. Mittels der Separiereinheit 21 und den damit verbundenen Weichen 13 erfolgt eine Aufteilung der Einzelwaren 3 auftragsrein auf die dafür vorgesehenen Ablagelinien. Die fertigen Aufträge in den Abgabelinien 20 können anschließend zu dem Warenausgang 22 weitergeleitet werden.

In dem Trennbereich 19 werden die Einzelware 3 auftragsrein auf die Abgabelinien 20 aufgeteilt. Die Einzelwaren 3 sind also komplett entmischt. Auf die Reihenfolge der Einzelwaren 3 je Auftrag, also auf die Reihenfolge der Einzelwaren 3 innerhalb einer Abgabelinie 20, kommt es nicht an. Das Verfahren zeichnet sich insbesondere dadurch aus, dass ein kontinuierlicher Warenstrom von dem Warenlager 2 über die Zwischenspeicher 5, die jeweils damit verbundenen Sammelbereiche 9 hin zu dem Trennbereich 19 mit den Abgabelinien 20 und dem Warenausgang 22 möglich ist. Mittels der zentralen Steuereinheit 23 kann das erfindungsgemäße Verfahren insbesondere vollautomatisiert ablaufen. Ein Eingreifen einer Bedienperson ist entbehrlich.

Ein wesentlicher Vorteil der Ausführung der Zwischenspeicher als Umlaufspeicher besteht darin, dass beispielsweise frühzeitig in den Zwischenspeicher 5 eingelagerte Einzelwaren 3, die noch keinen kompletten Auftrag bilden, in dem Umlaufspeicher umlaufen können, wobei dennoch gewährleistet ist, dass z. B. zu einem späteren Zeitpunkt in den Zwischenspeicher 5, insbesondere blockweise, eingelagerte Einzelwaren 3, die einen kompletten Auftrag bilden, direkt durch den Umlaufspeicher 5 in den Sammelbereich 9 gelangen können, ohne dass es eines zusätzlichen Umlaufs bedarf. Die Gefahr eines Stauen des Warenstroms ist reduziert.

## Patentansprüche

1. Verfahren zum auftragsorientierten Bereitstellen von Einzelwaren (3) für mehrere Aufträge aus einem Warenlager (2) umfassend die Verfahrensschritte
- Auslagern von Einzelwaren (3) aus einem Warenlager (2),
- auftragsorientiertes Zuführen der Einzelwaren (3) in mindestens einen Zwischenspeicher (5),
- Zwischenspeichern der Einzelwaren (3) eines Auftrags bis alle Einzelwaren (3) dieses Auftrags in dem mindestens einen Zwischenspeicher (5) verfügbar sind,
- Ausschleusen der Einzelwaren (3) des komplettierten Auftrags von dem mindestens einen Zwischenspeicher (5) in einen damit verbundenen Sammelbereich (9),
- auftragsreines Fördern der Einzelwaren (3) des komplettierten Auftrags von dem Sammelbereich (9) zu einer für den komplettierten Auftrag vorgesehenen Abgabelinie (20) eines Trennbereichs (19),
- Bereitstellen der Einzelwaren (3) des komplettierten Auftrags in der Abgabelinie (20) des Trennbereichs (19).

2. Verfahren nach Anspruch 1, **gekennzeichnet durch** ein Abgeben der Einzelwaren (3) des komplettierten Auftrags von der Abgabelinie (20) an einen Warenausgang (22).

3. Verfahren nach Anspruch 1 oder 2, **dadurch gekennzeichnet, dass** das Zwischenspeichern durch ein Umlaufen der Einzelwaren (3) in dem als Umlaufspeicher (5) ausgeführten Zwischenspeicher erfolgt.

4. Verfahren nach einem der Ansprüche 1 bis 3, **gekennzeichnet durch** ein Prüfen, ob die an einem Speicherausgang (8) des Zwischenspeichers (5) befindliche Einzelware (3) einem komplettierten Auftrag zugeordnet ist.

5. Verfahren nach einem der Anspräche 1 bis 4, **dadurch gekennzeichnet, dass** das Zuführen der Einzelwaren (3) in den mindestens einen Zwischenspeicher (5) unabhängig von einer aktuellen Anordnung der bereits zwischengespeicherten Einzelwaren (3) in dem Zwischenspeicher (5) erfolgt.

## Claims

1. Method for providing items (3) for more than one order from a warehouse (2) according to each particular order, the method comprising the following method steps:
- removing items (3) from a warehouse (2);
- conveying the items (3) to at least one temporary storage device (5) according to the respective order;
- temporarily storing the items (3) of one order until all items (3) of this order are available in the at least one temporary storage device (5);
- discharging the items (3) of the completed order (3) from the at least one temporary storage device (5) into a collection zone (9) linked therewith;
- conveying the items of the respective order from the collection zone (9) to a deliveiy line (20) of a separation zone (19) provided for the completed order as soon as the order is completed;
- providing the items (3) of the completed order in the delivery line (20) of the separation zone (19).

2. Method according to claim 1, **characterized by** a discharge of the items (3) of the completed order from the delivery line (20) to an outgoing goods zone (22).

3. Method according to claim 1 or 2, **characterized in that** temporary storage is carried out by a circulation of the items (3) in the temporary storage device configured as circulating storage device (5).

4. Method according to one of claims 1 to 3, **characterized by** an examination as to whether the item (3) available at a storage outlet (8) of the temporary storage device (5) is assigned to a completed order.

5. Method according to one of claims 1 to 4, **characterized in that** the items (3) are conveyed to the at least one temporary storage device (5) regardless of a current arrangement of the items (3) which are already temporarily stored in the temporary storage device (5).

## Revendications

1. Procédé de préparation sur commande de marchandises individuelles (3) pour plusieurs commandes à partir d'un entrepôt de marchandises (2) comprenant les étapes de procédé
- l'extraction de marchandises individuelles (3) d'un entrepôt de marchandises (2),
- le transfert sur commande des marchandises individuelles (3) dans au moins un dispositif de stockage intermédiaire (5),
- le stockage intermédiaire des marchandises individuelles (3) d'une commande jusqu'à ce que toutes les marchandises individuelles (3) de cette commande puissent être mises à disposition dans le ou les dispositifs de stockage intermédiaire (5),
- le déchargement des marchandises individuelles (3) de la commande complétée du ou des dispositifs de stockage intermédiaire (5) dans une zone de collecte (9) reliée à ces derniers,
- le transport en fonction de la commande des marchandises individuelles (3) de la commande complétée de la zone de collecte (9) à une ligne de distribution (20), prévue pour la commande complétée, d'une zone de séparation (19),
- la fourniture des marchandises individuelles (3) de la commande complétée dans la ligne de distribution (20) de la zone de séparation (19).

2. Procédé selon la revendication 1, **caractérisé par** une distribution des marchandises individuelles (3) de la commande complétée de la ligne de distribution (20) à une sortie de marchandises (22).

3. Procédé selon la revendication 1 ou 2, **caractérisé en ce que** le stockage intermédiaire est mis en oeuvre par une circulation des marchandises individuelles (3) dans le dispositif de stockage intermédiaire réalisé sous la forme d'un dispositif de stockage circulaire (5).

4. Procédé selon l'une quelconque des revendications 1 à 3, **caractérisé par** une action consistant à vérifier si la marchandise individuelle (3) située sur une sortie (8) du dispositif de stockage intermédiaire (5) est associée à une commande complétée.

5. Procédé selon l'une quelconque des revendications 1 à 4, **caractérisé en ce que** le transfert des marchandises individuelles (3) dans le ou les dispositifs de stockage intermédiaire (5) est mis en oeuvre indépendamment d'un agencement actuel des marchandises individuelles (3) ayant déjà fait l'objet d'un stockage intermédiaire dans le dispositif de stockage intermédiaire (5).
